# FASCICULE DE BREVET EUROPEEN

(11) **EP 0 452 437 B1**
(45) Date de publication et mention de la délivrance du brevet: **24.08.1994**
(21) Numéro de dépôt: 90915399.1
(22) Date de dépôt: 07.11.1990
(51) Int. Cl.: B65D 83/14, G05D 7/01

(54) **VANNE AUTOMATIQUE**
AUTOMATISCHES VENTIL
CONTROL VALVE

(30) Priorité: 08.11.1989 CH 4024/89
(43) Date de publication de la demande: 23.10.1991
(73) Titulaire: COMMENT, Paul, CH-2892 Courgenay (CH)
(72) Inventeur: COMMENT, Paul, CH-2892 Courgenay (CH)
(74) Mandataire: Meylan, Robert Maurice
(86) Numéro de dépôt international: CH9000258
(87) Numéro de publication internationale: WO9107334

(56) Documents cités:
- EP-A- 0 332 389
- WO-A-86/04163
- GB-A- 2 144 520

## Description

La présente invention a pour objet une vanne automatique pour enceinte contenant un produit liquide ou crémeux sous pression, comprenant un corps de vanne comprenant une chambre cylindrique munie, à l'une de ses extrémités, d'un orifice de sortie, un obturateur fermant, au repos, ledit orifice de sortie et solidaire d'une tige de piston, elle-même solidaire d'un piston muni d'un segment et susceptible de se déplacer dans un alésage, un ressort travaillant en compression entre ledit piston et l'autre extrémité de ladite chambre et maintenant ainsi l'obturateur contre l'orifice de sortie, l'espace de la chambre comprenant le ressort communiquant avec l'extérieur.

Des vannes de ce type sont décrites dans la demande de brevet internationale WO 86/04 163. Dans ces vannes antérieures, le passage du fluide se fait à travers une rainure longitudinale pratiquée dans la paroi de l'alésage, sous le joint O-ring constituant le segment du piston. Selon une forme d'exécution, la vanne comprend deux pistons munis de segments, ce qui nécessite un alésage précis relativement long et délicat à exécuter, en particulier lorsque la vanne est exécutée en matière synthétique injectée. Selon une autre forme d'exécution ne comportant qu'un piston muni d'un segment et pouvant par conséquent travailler avec un alésage court, la chambre est constituée de plusieurs parties. En outre, la rainure, située au fond de l'alésage, exige des moyens particuliers pour son obtention.

Du document EP-A-0 332 389, on connaît également une vanne comprenant une chambre de forme complexe présentant notamment un rétrécissement tronconique coopérant avec une partie tronconique d'un piston présentant plusieurs sections différentes. Une telle vanne est coûteuse à fabriquer.

La présente invention a pour but de réaliser une vanne automatique de conception plus simple et, par conséquent, plus facile à fabriquer et meilleur marché.

La vanne automatique selon l'invention est définie à la revendication 1.

L'anneau réducteur de section peut être constitué par une portée cylindrique percée de trous parallèles à l'axe. L'anneau réducteur de section doit pouvoir se déplacer librement dans la chambre et n'a pas besoin d'être ajusté à la manière d'un piston. Seule la partie de la chambre cylindrique dans laquelle se déplace le piston muni du segment doit être réalisée de façon parfaitement lisse et précise.

L'anneau réducteur de section peut être constitué par exemple par une portée cylindrique de la tige de piston percée de trous parallèles à l'axe. Lorsque le produit liquide ou crémeux sous pression arrive dans la chambre, entre le piston et l'anneau réducteur de section, il exerce une pression égale sur le piston et sur l'anneau réducteur, mais comme une partie du produit peut traverser l'anneau réducteur de section, la pression sur l'anneau réducteur chute immédiatement et le piston recule, ouvrant ainsi la vanne.

Travaillant sans garniture élastique au passage du produit, la vanne selon l'invention se prête particulièrement bien à la distribution de produits liquides présentant une certaine viscosité et de produits crémeux.

Le dessin annexé représente, à titre d'exemple, une forme d'exécution de l'invention et quelques variantes de celle-ci.

La figure 1 est une vue en coupe axiale, en position de repos, d'une vanne automatique selon l'invention montée sur une enceinte contenant un produit sous pression.

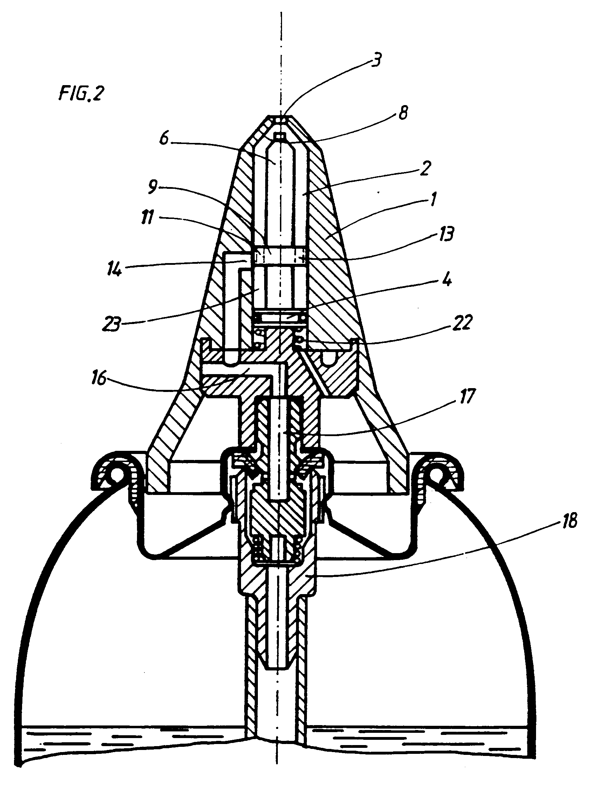

La figure 2 est une coupe analogue montrant la vanne en position d'ouverture.

La figure 3 est une vue en coupe selon III-III de la figure 1.

La figure 4 est une première variante de cette coupe.

La figure 5 est une seconde variante de cette coupe.

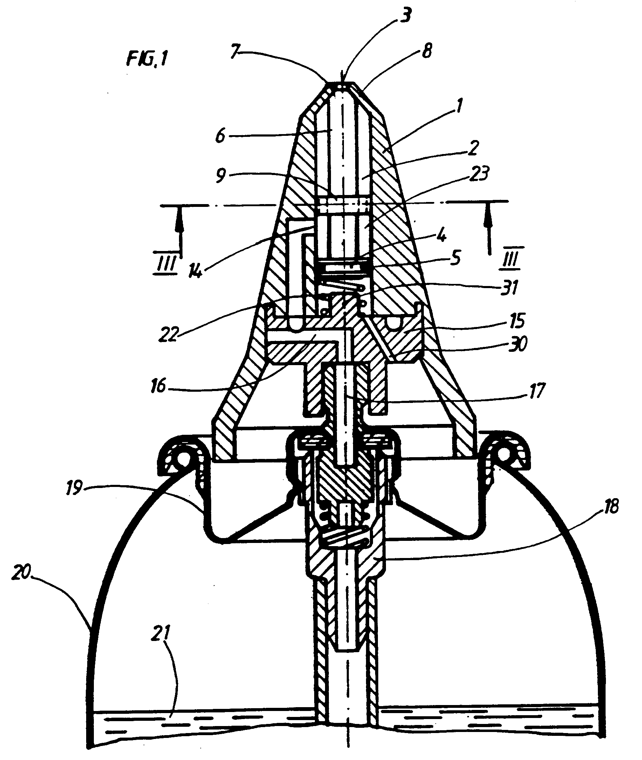

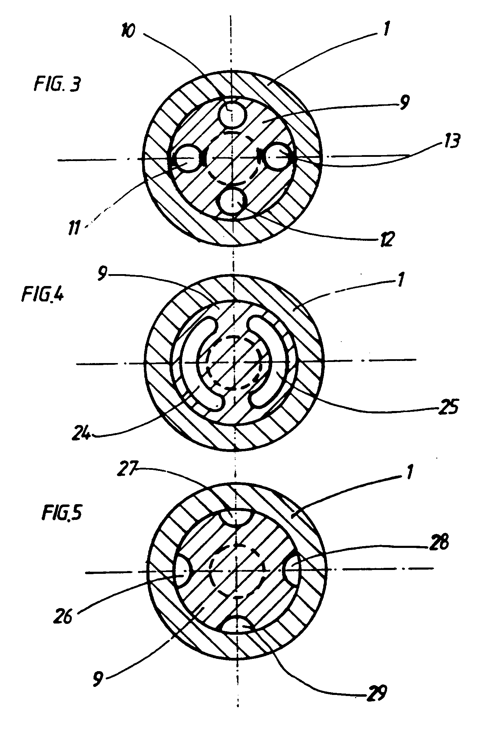

La vanne automatique représentée à la figure 1 comprend un corps 1 de forme extérieure générale conique contenant une chambre cylindrique 2 présentant à son extrémité supérieure un orifice de sortie 3. Dans cette chambre 2, dont la partie inférieure présente un alésage précis, est monté un piston 4 muni d'un segment constitué par un joint O-ring 5. Ce piston 4 est solidaire d'une tige de piston 6 dont l'extrémité conique 7 constitue un clapet coopérant avec un siège de clapet conique 8 pour fermer la vanne. La tige de piston 6 présente en outre une portée annulaire cylindrique 9 percée de trous parallèles à l'axe 10, 11, 12 et 13 (fig. 3). Cette portée cylindrique 13, avec ses trous, constitue un réducteur de section pour le passage du produit à distribuer par la vanne automatique. La portée 9 est située à une certaine distance du piston 4 et la chambre 2 présente un orifice d'entrée latéral 14 situé, en position de repos de la vanne, entre le piston 4 et la portée 9, à proximité de cette portée 9. La chambre 2 est fermée, à sa partie inférieure par une pièce de fermeture 15 percée d'un canal 16 mettant en commuunication l'orifice d'entrée de la vanne avec le conduit axial 17 d'une valve 18 sur laquelle est montée la vanne automatique. La valve 18 est de conception connue et ne sera pas décrite en détail. Elle est fixée de manière connue dans une coupelle 19 fixée elle-même sur une enceinte 20 contenant un produit 21 liquide ou crémeux sous pression. Un ressort 22, travaillant en compression, est monté entre le piston 4 et la pièce de fermeture 15. Ce ressort 22 maintient la tige 6 en position fermée.

La partie de la chambre 2 contenant le ressort 22 communique avec l'extérieur par un canal 30, de telle sorte que la pression dans cette partie de la chambre est toujours égale à la pression atmosphérique. Le recul du piston 4 est limité par une butée 31 formée par une saillie cylindrique de la pièce de fermeture 15. Cette butée 31 a donc également pour effet de limiter le recul de la portée cylindrique 9 de telle sorte que l'orifice 14 ne vienne pas à déboucher au-delà de cette portée 9.

Lorsque la vanne automatique est mise en communication avec le produit sous pression, dans l'exemple considéré en exerçant une pression sur la tige de valve de la valve 18 au moyen du corps de vanne 1, le produit sous pression pénètre dans la chambre 2 entre le piston 4 et la portée cylindrique 9. Une partie du liquide traverse les trous 10 à 13 de telle sorte que la poussée exercée sur la portée 9 est inférieure à la pousée exercée sur le piston 4. La différence des forces s'exerçant d'une part sur la portée 9 et d'autre part sur le piston 4 a pour effet de repousser en arrière le piston 4 en comprimant le ressort 22, ce qui provoque l'ouverture de la vanne, le produit pouvant alors s'écouler par l'orifice 3. La portée cylindrique 9 reculant avec le piston 4, vient, à un certain moment, obstruer plus ou moins complètement l'orifice 14, ce qui entraîne une chute de la pression dans la partie 23 de la chambre 2, entre le piston 4 et la portée cylindrique 9. Le ressort 22, correctement taré, peut alors repousser le piston 4 et par conséquent la portée cylindrique 9, ce qui a pour effet d'ouvrir à nouveau l'orifice 14. Il s'établit un équilibre plus ou moins stable entre la force exercée sur le piston 4 par le produit et la force du ressort 22, équilibre qui correspond à une réduction de la pression au-delà de la portée cylindrique 9. La vanne automatique fonctionne donc également comme détendeur et régulateur de débit.

L'anneau réducteur de section peut présenter une configuration différente de celle représentée. Les figures 4 et 5 représentent, à titre d'exemple, deux variantes d'exécution. Selon la figure 4, les trous cylindriques 10 à 13 de la figure 3 sont remplacés par deux trous 24 et 25 en forme d'arc de cercle. Dans la variante selon la figure 5, les trous sont remplacés par quatre rainures axiales 26, 27, 28 et 29. Dans ce cas, la tige de piston 6 doit être positionnée angulairement afin que l'orifice 14 soit toujours entre deux rainures. Un tel positionnement peut être obtenu, par exemple, en donnant à l'extrémité de la tige de piston 6 et au siège de piston 8 une forme de pyramide.

Le clapet de la vanne peut bien entendu être réalisé de nombreuses manières. Il peut notamment être constitué d'une pièce rapportée à l'extrémité de la tige de piston 6, cette pièce rapportée, en matériau élastique, venant s'appliquer sur le trou 3 pour l'obturer.

La vanne automatique selon l'invention peut bien entendu être utilisée avec n'importe quelle source de produit sous pression comportant une vanne principale.

La vanne selon l'invention peut être réalisée, totalement ou partiellement, en métal ou en matière synthétique.

La vanne selon l'invention n'exige pas de réglage délicat et fonctionne de façon parfaitement sûre.

## Revendications

1. Vanne automatique pour enceinte contenant un produit liquide ou crémeux sous pression, comprenant un corps de vanne (1) comprenant une chambre cylindrique (2) munie à l'une de ses extrémités d'un orifice de sortie (3), un obturateur (7) fermant, au repos, ledit orifice de sortie et solidaire d'une tige de piston (6) elle-même solidaire d'un piston (4) muni d'un segment (5) et susceptible de se déplacer dans un alésage, un ressort (22) travaillant en compression entre ledit piston et l'autre extrémité de ladite chambre et maintenant ainsi l'obturateur (7) contre l'orifice de sortie, l'espace de la chambre contenant le ressort communiquant avec l'extérieur (30), caractérisée par le fait qu'elle comprend un anneau réducteur de section (9) solidaire de la tige de piston (6), entre le piston (4) et l'obturateur (7) et un orifice d'entrée latéral (14) situé entre le piston et l'anneau réducteur de section, à proximité de l'anneau réducteur de section, dans la paroi du corps de vanne (1), cet orifice d'entrée latéral (14) communiquant avec une valve (18) fixée dans une coupelle fixée elle-même sur l'enceinte (20) contenant le produit, de telle sorte que ledit anneau peut recouvrir, au moins partiellement, l'orifice d'entrée (14) lors du déplacement du piston en direction du ressort.

2. Vanne selon la revendication 1, caractérisée par le fait que l'anneau réducteur de section est constitué par une portée annulaire cylindrique (9) de la tige de piston (6), cette portée cylindrique étant percée de trous (10 à 13 ; 24, 25).

3. Vanne selon la revendication 1, caractérisée par le fait que l'anneau réducteur de section est constitué par une portée cylindrique (9) munie de rainures ou d'encoches (26 à 29).

4. Vanne selon l'une des revendications 1 à 3, caractérisée par le fait que le clapet de vanne est constitué par une pièce rapportée à l'extrémité de la tige de piston.

## Claims

1. An automatic lift valve for a container containing a pressurized creamy or liquid product, comprising a valve body (1) comprising a cylindrical chamber (2) provided with at one of its ends with an outlet aperture (3), a valve seal (7) closing, in the position of rest, said outlet aperture and being solidly fixed to a piston rod (6) which itself is solidly fixed to a piston rod (4) fitted with a ring (5) and capable of moving in a bore, a spring (22) working in compression between said piston and the other end of said chamber and so maintaining the valve seal (7) against the outlet aperture, the space of the chamber containing the spring communicating with the exterior (30), characterized by the fact that said valve comprises a cross-section reducer ring (9) which is solidly fixed to the piston rod (6), between the piston (4) and the valve seal (7), and a lateral inlet aperture (14) situated between the piston and the cross-section reducer ring, close to the cross-section reducer ring, in the wall of the valve body (1), said lateral inlet aperture (14) communicating with a valve (18) fixed in a collar fitted itself on the container (20) containing said product, in a manner such that said ring can at least partially cover the inlet aperture (14) during the movement of the piston toward the spring.

2. The lift valve as claimed in claim 1, characterized by the fact that the cross-section reducer ring is constituted by a cylindrical annular bearing surface (9) of the piston rod (6), this cylindrical bearing surface being pierced by holes (10 to 13; 24, 25).

3. The lift valve as claimed claims 1, characterized by the fact that the cross-section reducer ring is constituted by a cylindrical bearing surface (9) provided with grooves or notches (26 to 29).

4. The lift valve as claimed in one of claims 1 to 3, characterized by the fact that the lift valve head is constituted by a part attached to the end of the piston rod.

## Patentansprüche

1. Automatisches Ventil für flüssige oder cremeförmige Produkte unter Druck enthaltende Behälter, bestehend aus einem Ventilkörper (1) mit einer zylindrischen Kammer (2), welche an einem ihrer Enden eine Auslassöffnung (3) aufweist, mit einem Verschluss (7), welcher, in Ruhestellung, die Auslassöffnung verschliesst und mit einer Kolbenstange (6) fest verbunden ist, welche selbst mit einem Kolben (4) fest verbunden ist, welcher ein Segment (5) aufweist und dazu fähig ist, sich in einer Bohrung zu bewegen, mit einer unter Druck arbeitenden Feder (22) zwischen dem genannten Kolben und dem anderen Ende der genannten Kammer, welche so den Verschluss (7) gegen die Auslassöffnung drückt, wobei der Raum der Kammer, die die Feder enthält, mit aussen (30) verbunden ist, dadurch gekennzeichnet, dass es einen Querschnitt reduzierenden Ring (9) aufweist, welcher mit der Kolbenstange (6) fest verbunden ist, zwischen dem Kolben (4) und dem Verschluss (7), und eine seitliche Eingangsöffnung (14), die zwischen dem Kolben und dem Querschnitt reduzierenden Ring liegt, in der Nähe des Querschnitt reduzierenden Ringes, in der Ventilkörperwand (1), wobei diese seitliche Eingangsöffnung (14) mit einem Ventil (18) verbunden ist, welches in einer Schale angebracht ist, welche selbst auf dem das Produkt enthaltenden Behälter befestigt ist, in solcher Weise, dass der genannte Ring wenigstens teilweise die Eingangsöffnung (14) während der Bewegung des Kolbens in Richtung der Feder verdecken kann.

2. Ventil gemäss Anspruch 1, dadurch gekennzeichnet, dass der Querschnitt reduzierende Ring aus einer reifförmigen zylindrischen Tragfläche (9) der Kolbenstange (6) besteht, wobei diese zylindrische Tragfläche von Löchern (10 bis 13, 24, 25) durchbohrt ist.

3. Ventil gemäss Anspruch 1, dadurch gekennzeichnet, dass der Querschnitt reduzierende Ring aus einer zylindrischen Tragfläche (9) besteht, welche Einschnitte oder Kerben (26 bis 29) aufweist.

4. Ventil gemäss einem der Ansprüche 1 bis 3, dadurch gekennzeichnet, dass die Ventilklappe aus einem zusammengesetzten Teil am Ende der Kolbenstange besteht.
